# EUROPÄISCHE PATENTANMELDUNG

(11) **EP 3 246 588 A1**
(43) Veröffentlichungstag der Anmeldung: **22.11.2017**
(21) Anmeldenummer: 16170627.0
(22) Anmeldetag: 20.05.2016
(51) Int. Cl.: F16D 65/095, F16D 65/18, F16D 121/12, F16D 121/06

(54) **BREMS- BZW. GLEIT-VORRICHTUNG**

(71) Anmelder: Jungblut wind elements GmbH & Co. KG, 46282 Dorsten (DE)
(72) Erfinder: Stegemann, Klaus, 48653 Coesfeld (DE); Inhestern, Petra-Maria, 48653 Coesfeld (DE)
(74) Vertreter: Engelhardt & Engelhardt

(57) **Zusammenfassung**

Bei einer Brems- bzw. Gleit- Vorrichtung (1) mit einer rotierenden Brems- oder Gleit-lager-Scheibe (2), die an einer Welle (3) für eine Windkraftanlage, einem Fahrzeug, einer Werkzeugmaschine oder dergleichen befestigt ist, mit einem Gehäuse (4), in dem eine Zustelleinrichtung (5) entlang einer Symmetrieachse (14) axial beweglich gelagert ist, und mit an der Zustelleinrichtung (5) angebrachten und der Scheibe (2) zugewandten Brems- bzw. Lager-Platte (6), die durch die Zustelleinrichtung (5) wahlweise auf die Scheibe (2) aufdrückbar bzw. von dieser wegbewegbar ist, soll die ungleichmäßige Abnutzung zwischen der Brems- bzw. Gleitlagerscheibe (2) und den Brems- bzw. Gleitbelag (6) der Vorrichtung (1) kompensiert werden.

Dies ist dadurch erreicht, dass zwischen der Platte (6) und der Zustelleinrichtung (5) ein Pendellager (11) in Form einer Kalotte, Halbschale , Viertelschale oder Kugelgelenk vorgesehen ist und dass das Pendellager (11) einen Drehpunkt (12) aufweist, der beabstandet zu der Scheibe (2) und koaxial zu der Symmetrieachse (14) des Pendellagers (11) verläuft.

## Beschreibung

Die Erfindung bezieht sich auf eine Brems- bzw. Gleit- Vorrichtung nach dem Oberbegriff des Patentanspruches 1.

Solche Brems- bzw. Gleit- Vorrichtung sind in unterschiedlichen konstruktiven Ausführungsvarianten bekannt und dienen beispielsweise dazu, die Welle einer Windkraftanlage festzusetzen, wenn an dieser Wartungsarbeiten durchgeführt werden sollen, das Stromnetz überlastet ist oder ausfällt. Auch bei geringen Windkräften durch die die Rotationsgeschwindigkeit des Windrades derart gering ist, dass keine ausreichende Energieumwandlung stattfindet wird die Welle festgesetzt, um die Lager und sonstige Verschleißteile während der windlosen Phase zu schonen.

Aufgrund der Dimensionen eines solchen Windrades herrschen an der das Windrad tragenden Welle beim Bremsen erhebliche Bremskräfte, die von der Vorrichtung aufzunehmen sind. In der Gondel der Windkraftanlage sind Drehgelenke vorgesehen, um den Azimut - also die Ausrichtung des Windrades bezogen auf die Anströmungsrichtung des Windes - und die einzelnen Rotorblätter optimal und selbsttätig auszurichten oder gegebenenfalls diese in den Wind zu stellen. Diese Drehgelenke vermindern jedoch die notwendigen Bremskräfte nur geringfügig. Darüber hinaus werden derartige Brems- bzw. Gleiteinrichtungen in Windkraftanlagen an der Azimutlagerung der Gondel eingesetzt, um die auftretenden Lasten während des Betriebs für die Azimutantriebe zu minimieren.

Die bekannten Brems- bzw. Gleit- Vorrichtungen bestehen aus einer Zustelleinrichtung, die in einem Gehäuse axial beweglich gelagert sind und an deren freien der Brems- bzw. Gleitlager-Scheibe der Welle der Windkraftanlage zugewandten Stirnseite ein Brems- bzw. Gleit- Belag angebracht bzw. vorgesehen ist, die auf einer mit der Welle fest verbundenen Scheibe während des Brems- bzw Lagerzustandes einwirkt.

Um eine ausreichend große Brems- bzw. Lagerkraft zu erzeugen sind typischer Weise die Scheiben sehr groß dimensioniert und eine Vielzahl von Vorrichtungen sind über den Umfang der Scheibe verteilt angeordnet. Dabei ist insbesondere der Belag aufgrund der vergleichsweisen unkomplizierten Wartung aber auch die Scheibe als Verschleißteil ausgebildet. Nachteiliger Weise führen unterschiedliche Abnutzungen sowie aus den eingetragenen Kräften resultierende Verformungen der Scheibe und der Beläge dazu, dass die Beläge nicht mehr plan auf die Scheibe aufliegen. Der optimale Wirkkontakt geht verloren bzw. eine geringere Wirkfläche zwischen dem Belag und der Scheibe entsteht und führt zu einer deutlichen Reduzierung der Bremsleistung bzw. der Lagerung.

Da der Austausch einer Scheibe einer Windkraftanlage äußerst aufwendig und kostenintensiv ist, sind die Werkstoffe der Scheibe und der Beläge derart aufeinander abgestimmt, dass die Scheibe eine deutlich längere Lebensdauer als die Beläge aufweist. Dies führt jedoch dazu, dass die Beläge häufiger gewechselt werden müssen. Nachteiliger Weise liegt nach dem Tausch eines Belages nach wie vor kein optimaler Wirkkontakt vor und der erneuerte Belag verschleißt aufgrund ungleichmäßiger Kontaktierung mit der Scheibe schneller. Dementsprechend sind derartige Vorrichtungen häufig zu warten und die dadurch bedingten Kosten beispielweise durch den Stillstand der Anlage als hoch zu beziffern. Ferner entstehen weitere Kosten durch den Verschleiß an der Verzahnung und den Antrieben, da die gewünschten Bremsmomente durch eingeschränkte Funktionalität nicht erreicht werden.

Es ist daher Aufgabe der Erfindung, eine Vorrichtung der eingangs genannten Gattung bereit zu stellen, durch die insbesondere Wellen von Windkraftanlagen zuverlässig festgesetzt, abgebremst und/oder gelagert werden können und zum anderen, dass die ungleichmäßigen Abnutzungen zwischen der Brems-bzw. Gleitlager- Scheibe und dem Brems- bzw. Gleitbelag der Vorrichtung kompensiert werden kann. Ferner sollen durch den Einsatz der Vorrichtung die Lebensdauer der Vorrichtungen und die Wartungsintervalle der Anlagen verlängert werden und der Wartungsaufwand sowie der dadurch bedingt Stillstand reduziert werden. Somit soll durch die Vorrichtung eine homogene Belastung der tribologischen Kontaktpartner abgesichert werden, womit die Funktionalität einer Bremse bzw. eines Gleitlagers erreicht wird.

Diese Aufgabe ist erfindungsgemäß durch die Merkmale des kennzeichnenden Teils von Patentanspruch 1 gelöst.

Weitere vorteilhafte Weiterbildungen der Erfindung ergeben sich aus den Unteransprüchen.

Dadurch, dass zwischen dem Brems- bzw. Gleit- Belag und der Zustelleinrichtung ein Pendellager in Form einer Kalotte, Halbschale oder Viertelschale vorgesehen ist und dass das Pendellager einen Drehpunkt aufweist, der koaxial zu der Symmetrieachse des Pendellagers verläuft, soll erreicht sein, dass das Pendellager die Abnutzung der Scheibe und der Beläge kompensiert ist und wodurch vermieden ist, dass die Wirkfläche zwischen dem Belag und der Scheibe verringert, unterschiedlich abgenutzt oder nicht parallel ist.

Aufgrund der in Form einer Kalotte, Halb- oder Viertelschale gekrümmten Struktur des Pendellagers ist erreicht, dass zwischen dem Brems- bzw. Gleit- Belag und der Zustelleinrichtung eine Relativbewegung stattfinden kann, wodurch sichergestellt ist, dass der Belag beim Bremsvorgang bzw. beim Lagern stets die Scheibe vollflächig kontaktiert bzw. dass die Kontaktflächen des Belages und der Scheibe stets parallel verlaufen. Das Pendellager erlaubt demnach eine pendelnde Bewegung des Befages, so dass die axialen von der Zustelleinrichtung erzeugten Kräfte unmittelbar an die Scheibe durch die Platte vollflächig übertragen sind.

Die zuverlässige Festsetzung bzw. Lagerung der Scheibe und damit der Welle ist durch die Pendelbewegung des Pendellagers, also der Relativbewegung zwischen der Zustelleinrichtung und der Brems- bzw. Gleitplatte, nicht behindert.

In der Zeichnung ist ein erfindungsgemäßes Ausführungsbeispiel einer Brems- bzw. Gleit- Vorrichtung dargestellt, die nachfolgend näher erläutert ist.

Im Einzelnen zeigt:
- Figur 1: eine schematische Darstellung einer Vorrichtung, im Schnitt mit einer an einer Welle befestigten Brems- bzw. Gleitlager- Scheibe und einer von einer Zustelleinrichtung axial betätigten Brems-bzw. Gleit- Belag ,
- Figur 2: die Vorrichtung gemäß Figur 1 in einem konkreten Ausführungsbeispiel bei dem zwischen dem Belag und der Zustelleinrichtung ein Pendellager vorgesehen ist, durch das der Belag, bezogen auf die Scheibe und der Zustelleinrichtung pendelnd gelagert ist, im unbetätigten Zustand und
- Figur 3: die Vorrichtung gemäß Figur 2, im betätigten Zustand und aus der Symmetrieachse der Brems- bzw. Gleitvorrichtung ausgelenkt, wobei der Belag von einem an einem Gehäuse der Brems-bzw. Gleit- Vorrichtung vorgesehenen Anschlag abgestützt ist.

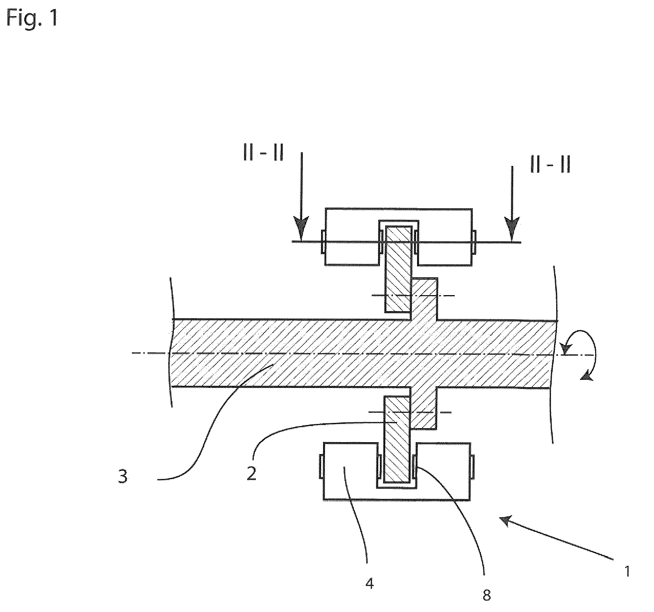

Aus Figur 1 ist eine Brems- bzw. Gleit- Vorrichtung 1 zu entnehmen, durch die eine an einer Welle 3 befestigten Brems- bzw. Gleitlager- Scheibe 2 betätigt ist. Die Welle 3 kann dabei einem Rotor einer Windkraft-Anlage zugeordnet sein und ist während des Betriebs in Rotation versetzt.

Soll beispielsweise die Drehgeschwindigkeit des Rotors der Windkraft-Anlage bzw. der Welle 3 aufgrund ungeeigneter Wetterbedingungen, zur Wartung oder aus Sicherheitsgründen abgebremst und festgesetzt werden, wird eine Bremskraft F_{B} durch die Vorrichtung 1 auf die Scheibe 2 bzw. die Welle 3 aufgebracht und die Rotation der Welle 3 bis zum Stillstand abgebremst.

Die Vorrichtung 1 kann jedoch grundsätzlich für jede beliebige Gleitlagerung oder Bremswirkung, beispielsweise an Fahrzeugen, Werkzeugmaschinen oder sonstigen rotierenden Bauteilen, verwendet werden. Auch eine Kombination eines Gleitlager und einer Bremse soll diese Vorrichtung bilden können, wobei die Vorrichtung den Anspruch einer Gleitlagerung und einer Bremse in sich vereint. Bei dem gezeigten Ausführungsbeispiel handelt es sich somit ausschließlich um einen bevorzugten Anwendungsfall.

Die Vorrichtung 1 besteht des Weiteren aus einem Gehäuse 4, in dem eine Durchgangsbohrung 9 eingearbeitet ist. Die Symmetrieachse der Durchgangsbohrung 9 bzw. des Gehäuses 4 ist mit der Bezugsziffer 14 gekennzeichnet. Fluchtend zu der Symmetrieachse 14 des Gehäuses 4 ist in der Durchgangsbohrung 9 eine Zustelleinrichtung 5 in Form eines pneumatisch oder hydraulisch betätigten Kolbens vorgesehen. Die Zustelleinrichtung 5 ist axial verstellbar in der Durchgangsbohrung 9 des Gehäuses 4 gelagert und kann demnach in Richtung der Scheibe 2 bzw. der Welle 3 bewegt oder von dieser weggezogen werden. An der der Welle 3 zugewandten Stirnseite der Zustelleinrichtung 5 ist ein Brems- bzw. Lager- Platte 6 angebracht, die mit einem Belag 8 ganz oder bereichsweise verkleidet ist.

Der Belag 8 tritt demnach in Wirkkontakt mit der Scheibe 2, wenn die Zustelleinrichtung 5 die Platte 6 in Richtung der Scheibe 2 bewegt. Durch den Wirkkontakt zwischen der Scheibe 2 und dem Belag 8 resultiert eine Reib- bzw. Bremskraft F_{B} die proportional zu den Reibkoeffizienten µ und der durch die Zustelleinrichtung aufgebrachten Kraft (*F_{B} =* µ**F_{A}*) ist und durch die die Welle 3 abgebremst bzw. im Stillstand gehalten ist. Die Reib bzw. Bremskraft F_{B} steht folglich senkrecht zu Symmetrieachse 14 bzw. der durch die Zustelleinrichtung 5 aufgebrachten Kraft F_{A}

Ferner kann die Welle 3 durch die Zustelleinrichtung 5 wieder freigegeben werden indem die Zustelleinrichtung 5 den Belag 8 von der Scheibe 2 beabstandet angeordnet, und somit ein Luftspalt 10 zwischen dem Belag 8 der Platte 6 und der Scheibe 2 entsteht; in diesem Betriebszustand können die Brems- bzw. Gleitlager- Scheibe 2 und die Welle 3 ungebremst rotieren.

Die Welle 3 kann in eine beliebige Rotationsrichtung bewegt werden, beispielsweise um die Symmetrieachse 14 oder um eine zu der Symmetrieachse 14 senkrecht verlaufende Drehachse der Welle 3.

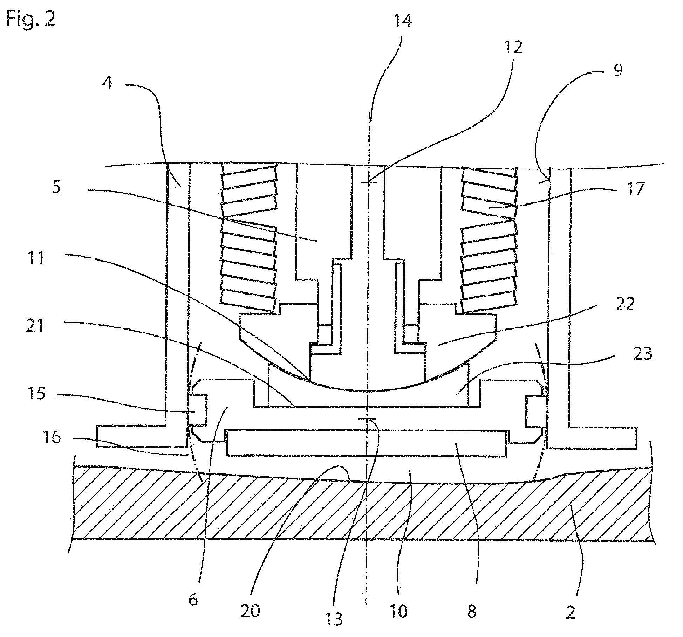

In Figur 2 ist ein konkretes Ausführungsbeispiel der Vorrichtung 1 gemäß Figur 1 im geöffneten Zustand abgebildet. Die Welle 3 kann demnach ungebremst rotieren. Die Vorrichtung 1 ist als eine fail-save Bremse ausgebildet, wobei die Bremskraft F_{B} durch Schraubendruckfedern 17, Tellerfedern oder dgl. aufgebracht wird. Um Vorrichtung 1 zu öffnen und die Scheibe 2 bzw. die Welle 3 freizugeben, ist der Belag 8 und die Platte 6 von der Zustelleinrichtung 5 derart von der Scheibe 2 wegbewegt, dass zwischen dem Belag 8 und der Scheibe 2 ein Luftspalt 10 ist, der demnach durch die Rückholkraft der Zustelleinrichtung 5 erzeugt ist.

Die dargestellte Scheibe 2 weist bereits eine Abnutzung 20 auf, wodurch die Oberfläche der Scheibe 2 gewölbt ist und nicht mehr senkrecht zu der Symmetrieachse 14 der Vorrichtung 1 verläuft. Beim Schließen der Vorrichtung 1 würde der Belag 8 aufgrund der Abnutzung 20 und des resultierenden Winkel-Versatzes nicht mehr flächig die Scheibe 2 kontaktieren, so dass die Bremskraft F_{B} deutlich reduziert ist.

Um diesen Winkelversatz zu kompensieren, ist zwischen der Zustelleinrichtung 5 und der Platte 6 bzw. Belag 8 ein Pendellager 11 vorgesehen, das in Form einer Kalotte oder als Schale bzw. Kugelkopf-Gelenk ausgestaltet ist. Das Pendellager 11 besteht dabei aus einer ersten Lagerhälfte 22 und einer zweiten Lagerhälfte 23, wobei die erste Lagerhälfte 22 der freien Stirnseite der Zustelleinrichtung 5 zugeordnet ist dabei und bezogen auf die von der Scheibe 2 gebildeten Ebene konkav gekrümmt, also in Richtung der Scheibe 2 gewölbt ist. Die zweite Lagerhälfte 23 ist dabei derart ausgestaltet, dass der Kreisbogen der gekrümmt Lagerfläche mindestens dem Kreisbogen der ersten Lagerhälfte 22 entspricht, wobei zusätzlich bei der Dimensionierung der maximale Auslenkungswinkel in jede Schwenkrichtung zu berücksichtigen ist ( = Kreisbogen der ersten Lagerhälfte 22 + 2 *maximaler Auslenkungswinkel).

Die Innenkontur der zweiten Lagerhälfte 23 ist der Platte 6 zugeordnet und an die Außenkontur der ersten Lagerhälfte 22 angepasst, so dass das erfindungsgemäße Pendellager 11 entsteht.

Zwischen der zweiten Lagerhälfte 23 und der Platte 6 ist darüber hinaus ein Flächengleitlager 21 angeordnet, das in einer Ebene eine Relativbewegung zwischen der zweiten Lagerhälfte 23 und der Platte 6 zulässt. Beim Verschwenken des Pendellagers 11 würde ohne das Flächengleitlager 21 die Platte 6 und der Belag 8 aus der Symmetrieachse 14 bewegt werden, da der Drehpunkt 12 des Pendellagers 11 beabstandet zu der Platte 6 bzw. dem Belag 8 ist. Das Flächengleitlager 21 kompensiert folglich diesen Versatz, so dass die Platte 6 bei dem Verschwenken durch das Pendellager 11 der Drehpunkt 13 der Platte 6 stets auf der Symmetrieachse 14 positioniert ist.

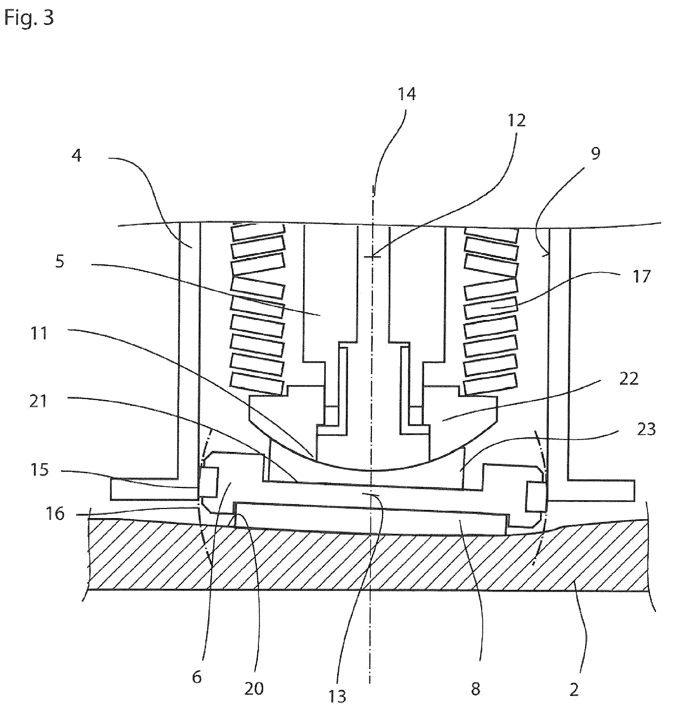

In der Figur 3 ist Vorrichtung 1 in dem geschlossenen Zustand dargestellt. Die Platte 6 bzw. der Belag 8 werden durch die Teller-Federn 17 der Zustelleinrichtung 5 entlang der Symmetrieachse 14 in Richtung Scheibe 2 zugestellt und auf diese gepresst wodurch die Bremskraft F_{B} aufgebracht ist. Der Winkel-Versatz zwischen der Scheibe 2 und der Platte 6 bzw. dem Belag 8 wird bei der Kontaktierung durch das Pendellager 11 kompensiert. Die Platte 6 bzw. der Belag 8 erfahren nämlich bei dem ersten Kontakt mit der Scheibe 2 ein Drehmoment, das die Platte 6 und den Belag 8 um den Winkelversatz verdreht. Der Belag 8 liegt nach dem Verdrehen somit weitgehend vollflächig auf der abgenutzten Scheibe 2 an.

Die Platte 6 ist darüber hinaus seitlichen an der Innenwand der Durchgangsöffnung 9 durch ein oder mehrere Anschläge 15 abgestützt bzw. gelagert. Die Anschläge 15 ragen demnach in das Innere der Durchgangsöffnung 9 und lagern die Platte 6 in der Ebene senkrecht zu der Symmetrieachse 14. Durch die Anschläge 15 ist die Platte 6 bzw. der Belag 8 beim Bremsvorgang an der Innenwand der Durchgangsöffnung 9 abgestützt, so dass die Bremskraft F_{B} bzw. die resultierende Lagerkraft ausgeleitet werden kann. Damit die Platte 6 um mehr als 20° bezogen auf den Null-Punkt, der durch die Ebene senkrecht zu der Symmetrieachse 14 der Vorrichtung 1 gebildet ist, verschwenkbar ist, sind die Anschläge 15 in Richtung der Innenwand der Durchgangsöffnung 9 verrundete Lagerflächen 16 angeformt, wobei der Durchmesser der verrundeten Lagerfläche 16 der Breite der Durchgangsöffnung 9 entspricht. Durch die Lagerfläche 16 wird ein Verkanten der Platte 6 in der Durchgangsöffnung 9 verhindert. Somit kann die Platte 6 um einen Auslenkungswinkel von ± 20° um den von der Symmetrieachse 14 gebildeten Null-Punkt ausgelenkt werden, also relativ zu der Zustelleinrichtung 5 bewegt werden.

Um die Welle 3 erneut zur Rotation freizugeben, ist Belag 8 von der Scheibe 2 durch die der Zustelleinrichtung 5 wegbewegt. Hierzu sind der Belag 8 und die Zustelleinrichtung 5 derart mechanisch gekoppelt, dass der Belag 8 der Bewegung der Zustelleinrichtung 5 folgt. Die mechanische Kopplung kann beispielsweise durch eine oder mehrere Zugfedern gebildet werden. Die Zugfedern halten einerseits das Pendellager 11 zusammen und andererseits überführen diese die Platte 6 im geöffneten Zustand der Vorrichtung 1 in die Nullstellung.

Das Pendellager 11 kann darüber hinaus auch derart ausgestaltet sein, dass die erste Lagerhälfte 22 eine konkave Geometrie aufweist und die zweite Lagerhälfte 23 konvex geformt ist. Die Platte 6 bzw. die zweite Lagerhälfte 23 kann somit die Form einer Kugel, Halbkugel bzw. Teilkugel haben, so dass der Drehpunkt 13 der Platte 6 und der der Drehpunkt 12 des Pendellagers 11 identisch sind und stets auf der Symmetrieachse 14 liegen. Der Durchmesser der teilkugelförmigen Platte 6 bzw. der zweiten Lagerhälfte 23 entspricht der Breite der Durchgangsbohrung 9 bzw. den Durchmesser der Durchgangsbohrung 9. Die Oberfläche der teilkugelförmigen Platte 6 bildet sodann die Anschläge 15. Der Teilkreisbogen der zweite Lagerhälfte 23 sollte mindestens 180° und zusätzlich dem doppelten des gewünschten Auslenkungswinkel, vorzugsweise 180° + 2 x 10° = 200°, betragen.

Der Durchmesser bzw. der Radius der ersten und der zweiten Lagerhälfte 22, 23 kann auch keiner als die Breite der Durchgangsbohrung 9 bzw. den Durchmesser der Durchgangsbohrung 9 sein. Vorteilhafter Weise sollte die Position des Drehpunkts 13 der Platte 6 und des Drehpunkts 12 des Pendellagers 11 übereinstimmen.

## Patentansprüche

1. Brems- bzw. Gleit- Vorrichtung (1) mit einer rotierenden Brems- oder Gleitlager-Scheibe (2), die an einer Welle (3) für eine Windkraftanlage, einem Fahrzeug, einer Werkzeugmaschine oder dergleichen befestigt ist, mit einem Gehäuse (4), in dem eine Zustelleinrichtung (5) entlang einer Symmetrieachse (14) axial beweglich gelagert ist, und mit an der Zustelleinrichtung (5) angebrachten und der Scheibe (2) zugewandten Brems- bzw. Lager-Platte (6), die durch die Zustelleinrichtung (5) wahlweise auf die Scheibe (2) aufdrückbar bzw. von dieser wegbewegbar ist,
**dadurch gekennzeichnet,**
**dass** zwischen der Platte (6) und der Zustelleinrichtung (5) ein Pendellagers (11) in Form einer Kalotte, Halbschale , Viertelschale oder Kugelgelenk vorgesehen ist und dass das Pendellager (11) einen Drehpunkt (12) aufweist, der beabstandet zu der Scheibe (2) und koaxial zu der Symmetrieachse (14) des Pendellagers (11) verläuft.

2. Vorrichtung (1) nach Anspruch 1,
**dadurch gekennzeichnet,**
**dass** durch das Pendellager (11) eine Relativbewegung zwischen der Zustelleinrichtung (5) und der Scheibe (2) um mindestens einen Raumwinkel freigegeben ist.

3. Vorrichtung (1) nach Anspruch 1 oder 2,
**dadurch gekennzeichnet,**
**dass** die Platte (6) mittels ein oder mehrerer Anschläge (15) an dem Gehäuse (4) abgestützt ist und dass der Anschlag (15) eine konvexe Lagerfläche (16) aufweist.

4. Vorrichtung (1) nach Anspruch 1, 2 oder 3,
**dadurch gekennzeichnet,**
**dass** durch das Pendellager (11) eine Auslenkung der Platte (6) um ± 20°, vorzugsweise von ± 10°, vorgesehen ist.

5. Vorrichtung (1) nach Anspruch 1, 2 oder 3,
**dadurch gekennzeichnet,**
**dass** zwischen dem Pendellager (11) und der Platte (6) ein Flächengleitlager (21) angeordnet ist und dass das Flächengleitlager (21) eine Relativbewegung in einer Ebene zwischen dem Pendellager (11) und der Platte (6) zulässt.

6. Vorrichtung (1) nach einem der vorgenannten Ansprüche,
**dadurch gekennzeichnet,**
**dass** die Zustelleinrichtung (5) als pneumatisch oder hydraulisch betriebener Kolben ausgestaltet ist, dass die Platte (6) durch die Zustelleinrichtung (5) von der Scheibe (2) beabstandet gehalten oder zugestellt ist.

7. Vorrichtung (1) nach einem der vorgenannten Ansprüche,
**dadurch gekennzeichnet,**
**dass** seitlich neben oder um die Zustelleinrichtung (5) eine oder mehrere Schraubendruckfedern (17) oder Tellerfedern angeordnet ist bzw. sind, die der Zustellkraft der Zustelleinrichtung (5) entgegenwirken und die zwischen dem Gehäuse (4) und der Platte (6) abgestützt sind.

8. Vorrichtung (1) nach einem der vorgenannten Ansprüche,
**dadurch gekennzeichnet,**
**dass** das Pendellager (11) aus einer ersten Lagerhälfte (22) und einer zweiten Lagerhälfte (23) gebildet ist, dass die zweite Lagerhälfte (23) der Platte (6) zugeordnet ist, dass die zweite Lagerhälfte (23) kugelförmig oder schalenförmig ausgeformt ist, dass die erste Lagerhälfte (22) an der freien der Zustelleinrichtung (5) angeordnet ist, und dass die Innenkontur der ersten Lagerhälfte (22) mir der zweiten Lagerhälfte (23) korrespondiert.

9. Vorrichtung (1) nach Anspruch 6
**dadurch gekennzeichnet,**
**dass** die erste Lagerhälfte (22) des Pendellagers (11) aus der von der Scheibe (2) gebildeten Ebene in Richtung der Zustelleinrichtung (5) gebogen oder konkav gekrümmt ausgestaltet sind.

## Geänderte Patentansprüche

### Geänderte Patentansprüche gemäss Regel 137(2) EPÜ.

1. Brems- bzw. Gleit- Vorrichtung (1) mit einer rotierenden Brems- oder Gleitlager-Scheibe (2), die an einer Welle (3) für eine Windkraftanlage, einem Fahrzeug, einer Werkzeugmaschine oder dergleichen befestigt ist, mit einem Gehäuse (4), in dem eine Zustelleinrichtung (5) entlang einer Symmetrieachse (14) axial beweglich gelagert ist, mit an der Zustelleinrichtung (5) angebrachten und der Scheibe (2) zugewandten Brems- bzw. Lager-Platte (6), die durch die Zustelleinrichtung (5) wahlweise auf die Scheibe (2) aufdrückbar bzw. von dieser wegbewegbar ist,
und mit einer zwischen der Platte (6) und der Zustelleinrichtung (5) vorgesehenen Pendellager (11) in Form einer Kalotte, Halbschale , Viertelschale oder Kugelgelenk, das einen Drehpunkt (12) aufweist, der beabstandet zu der Scheibe (2) und koaxial zu der Symmetrieachse (14) des Pendellagers (11) verläuft,
**dadurch gekennzeichnet,**
**dass** die Platte (6) mittels ein oder mehrerer Anschläge (15) an dem Gehäuse (4) abgestützt ist und dass der Anschlag (15) eine konvexe Lagerfläche (16) aufweist.

2. Vorrichtung (1) nach Anspruch 1,
**dadurch gekennzeichnet,**
**dass** durch das Pendellager (11) eine Relativbewegung zwischen der Zustelleinrichtung (5) und der Scheibe (2) um mindestens einen Raumwinkel

3. Vorrichtung (1) nach Anspruch 1 oder 2
**dadurch gekennzeichnet,**
**dass** durch das Pendellager (11) eine Auslenkung der Platte (6) um ± 20°, vorzugsweise von ± 10°, vorgesehen ist.

4. Vorrichtung (1) nach Anspruch 1 oder 2
**dadurch gekennzeichnet,**
**dass** zwischen dem Pendellager (11) und der Platte (6) ein Flächengleitlager (21) angeordnet ist und dass das Flächengleitlager (21) eine Relativbewegung in einer Ebene zwischen dem Pendellager (11) und der Platte (6) zulässt.

5. Vorrichtung (1) nach einem der vorgenannten Ansprüche,
**dadurch gekennzeichnet,**
**dass** die Zustelleinrichtung (5) als pneumatisch oder hydraulisch betriebener Kolben ausgestaltet ist, dass die Platte (6) durch die Zustelleinrichtung (5) von der Scheibe (2) beabstandet gehalten oder zugestellt ist.

6. Vorrichtung (1) nach einem der vorgenannten Ansprüche,
**dadurch gekennzeichnet,**
**dass** seitlich neben oder um die Zustelleinrichtung (5) eine oder mehrere Schraubendruckfedern (17) oder Tellerfedern angeordnet ist bzw. sind, die der Zustellkraft der Zustelleinrichtung (5) entgegenwirken und die zwischen dem Gehäuse (4) und der Platte (6) abgestützt sind.

7. Vorrichtung (1) nach einem der vorgenannten Ansprüche,
**dadurch gekennzeichnet,**
**dass** das Pendellager (11) aus einer ersten Lagerhälfte (22) und einer zweiten Lagerhälfte (23) gebildet ist, dass die zweite Lagerhälfte (23) der Platte (6) zugeordnet ist, dass die zweite Lagerhälfte (23) kugelförmig oder schalenförmig ausgeformt ist, dass die erste Lagerhälfte (22) an der freien der Zustelleinrichtung (5) angeordnet ist, und dass die Innenkontur der ersten Lagerhälfte (22) mir der zweiten Lagerhälfte (23) korrespondiert.

8. Vorrichtung (1) nach Anspruch 5
**dadurch gekennzeichnet,**
**dass** die erste Lagerhälfte (22) des Pendellagers (11) aus der von der Scheibe (2) gebildeten Ebene in Richtung der Zustelleinrichtung (5) gebogen oder konkav gekrümmt ausgestaltet sind.
